Europäisches Patentamt

**European Patent Office**

**Office européen des brevets**

(19)

(11) Numéro de publication: **0 019 539**

**A1**

(12) **DEMANDE DE BREVET EUROPEEN**

(21) Numéro de dépôt: 80400655.9

(22) Date de dépôt: 12.05.80

(51) Int. Cl.³: **A 47 J 43/14**
**A 47 G 19/28**

(30) Priorité: 15.05.79 FR 7912326

(43) Date de publication de la demande:
26.11.80 Bulletin 80/24

(84) Etats Contractants Désignés:
AT BE CH DE FR GB IT LI LU NL SE

(71) Demandeur: Frechou, Jérôme
17 Quai de l'Ile du Bac
F-78700 Conflans St Honorine(FR)

(71) Demandeur: Isambert, Gilles
65bis Rue de Marolles
F-94470 Boissy St Leger(FR)

(72) Inventeur: Frechou, Jérôme
17 Quai de l'Ile du Bac
F-78700 Conflans St Honorine(FR)

(72) Inventeur: Isambert, Gilles
65bis Rue de Marolles
F-94470 Boissy St Leger(FR)

(74) Mandataire: Phélip, Bruno et al,
c/o Cabinet HARLE & LECHOPIEZ 21, rue de La
Rochefoucauld
F-75009 Paris(FR)

(54) Procédé d'épluchage des oeufs durs et machines pour la mise en oeuvre dudit procédé.

(57) La machine comporte un bâti (3), un présentoir tournant comportant un plateau (14) monté en bout d'un arbre vertical (7) tournant dans un palier (4), des bols récepteurs d'oeufs durs (17) suspendus autour dudit plateau (14), une goulotte d'amenée d'oeufs durs (26), un plateau supérieur (2) porteur d'un vérin de rappel (21) et de manchons (27) répartis à la périphérie dudit plateau et à travers lesquels peuvent coulisser une série d'outils à déplacement vertical, et un plateau de rappel (23) fixé à l'extrémité de la tige (22) du vérin (21) et destiné à commander le déplacement des outils qui sont sollicités en direction du présentoir par des ressorts de compression.

Application à l'épluchage automatique des oeufs durs à l'échelon industriel.

EP 0 019 539 A1

.../...

FIG.1

1

" Procédé d'épluchage des oeufs durs et machines pour la mise en oeuvre dudit procédé"

La présente invention concerne un procédé d'épluchage des oeufs durs et des machines pour la mise en oeuvre de ce procédé.

L'invention s'applique plus particulièrement à l'épluchage automatique des oeufs durs à une échelle industrielle telle que notamment dans l'industrie hôtelière (restaurants, cantines etc...)ou dans les collectivités (hôpitaux, associations, etc...) où la consommation d'oeufs durs est très importante.

On connaît actuellement des machines à éplucher les oeufs durs utilisant de l'eau sous pression pour décoller le blanc de l'oeuf de la coquille et de sa membrane.

Ces machines donnent d'excellents résultats, mais elles fonctionnent manuellement et, lorsque le blanc de l'oeuf est refoulé par la pression de l'eau hors de la coquille,il entraîne généralement la calotte inférieure de ladite coquille qui est littéralement arrachée du reste de celle-ci. L'épluchage de l'oeuf n'est donc pas total et doit être complété d'une opération manuelle consistant à enlever ladite calotte qui reste collée au blanc de l'oeuf dur.

Toutes ces opérations manuelles abaissent évidemment considérablement le rendement de l'appareil qui convient parfaitement pour une utilisation familiale ou dans des débits de boissons où la consommation d'oeufs durs n'est pas très importante; par contre,ces dispositifs s'avèrent d'un rendement nettement insuffisant pour une utilisation à l'échelle industrielle,lorsqu'il est nécessaire d'éplucher en peu de temps des milliers d'oeufs,tâche qui habituellement mobilise un personnel important.

Des tentatives d'automatisation des opérations d'épluchage d'oeufs durs ont déjà été faites et diverses machines semi-automatiques ont été proposées,notamment dans le brevet US N° 3.613.756. Afin d'améliorer le rendement,la machine divulguée dans ce brevet américain est conçue de manière à pouvoir éplucher simultanément un grand nombre d'oeufs disposés dans des paniers. Elle présente toutefois l'inconvénient de nécessiter une orientation préalable des oeufs qui doivent toujours se présenter dans le même sens. De plus,cette machine présente le même inconvénient que les machines manuelles,à savoir que les blancs des oeufs qui sont éjectés hors de leur coquille emportent avec eux un bout de calotte de ladite coquille,ce qui nécessite une opération supplémentaire d'épluchage pour éliminer celle-ci.

Le but de la présente invention est donc de proposer un procédé d'épluchage ne nécessitant aucune orientation privilégiée des oeufs et permettant ainsi d'automatiser toutes les différentes opérations ainsi que des machines mettant en oeuvre ce/procédé, les

dites machines étant entièrement automatiques, de conception simple et de faible encombrement et permettant néanmoins d'obtenir une cadence élevée en ne nécessitant aucune opération manuelle complémentaire d'épluchage des blancs d'oeufs extraits de leurs coquilles.

Selon l'invention, le procédé d'épluchage d'oeufs durs consiste essentiellement à injecter un fluide sous pression à l'intérieur de la coquille entre la membrane et le blanc, l'injection de fluide étant effectuée aux deux extrémités de l'oeuf à éplucher.

Les machines automatiques pour la mise en oeuvre du procédé ci-dessus comportent un bâti porteur, plusieurs bols récepteurs d'oeufs durs ayant un orifice d'entrée et un fond muni d'une ouverture circulaire étranglée dont le diamètre est légèrement inférieur au plus gros diamètre des oeufs, ainsi qu'une source de fluide comprimé, ladite machine comprenant en outre :

- un présentoir mobile portant les bols récepteurs,

- des moyens d'entraînement du présentoir,

- un poste d'alimentation ayant un distributeur délivrant un oeuf dur par bol qui se présente,

- des moyens destinés à briser la coquille à chaque bout des oeufs,

- des moyens d'éclatement reliés à la source de fluide comprimé et servant à injecter le fluide sous pression à l'intérieur de la coquille, entre la membrane et le blanc de l'oeuf,

- des moyens d'éjection reliés à la source de fluide comprimé, lesdits moyens étant agencé de manière à pouvoir obturer hermétiquement l'orifice d'entrée des bols et mettre l'intérieur de ceux-ci sous pression pour refouler le blanc des oeufs hors de leur coquille à travers l'ouverture circulaire du fond des bols, et

- un poste de nettoyage muni de moyens destinés à refouler les débris de coquille hors des bols.

Selon une forme préférentielle de réalisation de l'invention, le présentoir comporte un plateau porteur des bols récepteurs et un arbre support accouplé audit plateau et monté tournant dans un palier fixe.

Selon un premier mode de réalisation, le présentoir est entraîné en rotation de manière discontinue par portions de tour successives, les moyens d'entraînement comportant un vérin fixe, un levier dont une extrémité est articulée à la tige du vérin et dont l'autre extrémité est solidaire en rotation de l'arbre support, et un joint d'accouplement à entraînement unidirectionnel entre le plateau et l'arbre support. Le joint d'accouplement entre le plateau et l'arbre support peut être un dispositif de roue libre, ou encore un système d'encliquetage à rochet et cliquets.

En variante, les moyens d'entraînement en rotation du présentoir peuvent comporter un moteur électrique pas-à-pas et un engrenage accouplant l'arbre du moteur à l'arbre support qui est rendu solidaire du plateau.

Selon le premier mode de réalisation, la commande des outils est assurée par des ressorts qui sollicitent indépendamment chaque outil en direction du plateau du présentoir et par au moins un vérin de rappel desdits outils en position rétractée, ceux-ci étant reliés à la tige du vérin par un moyen de liaison quelconque pouvant être par exemple un plateau de rappel.

Les moyens destinés à briser la coquille à chaque extrémité des oeufs comportent deux marteaux opposés alignés dans le prolongement l'un de l'autre sur un axe qui se confond avec l'axe des bols récepteurs présentés par le présentoir, lesdits marteaux étant situés de chaque côté du bol et déplaçables l'un vers l'autre sous l'action des moyens de commande des outils.

Deux éclateurs tubulaires opposés sont alignés dans le prolongement l'un de l'autre sur un axe qui se confond avec celui d'un bol récepteur présenté par le présentoir, lesdits éclateurs étant situés de chaque côté du bol et déplaçables l'un vers l'autre sous l'action desdits moyens de commande des outils.

Quant aux moyens d'éjection, ils comportent un bouchon qui épouse de manière étanche le bord de l'orifice d'entrée des bols récepteurs. Ledit bouchon est fixé à une extrémité ouverte d'un guide tubulaire monté coulissant le long d'un axe avec lequel se confond l'axe des bols présentés, tandis que l'autre extrémité du guide est reliée à la source du fluide comprimé de manière à pouvoir mettre l'intérieur du bol sous pression et chasser ainsi l'oeuf à travers le fond dudit bol. Le poste de nettoyage est équipé d'un poussoir destiné à briser les restes de coquille et à pousser les débris hors des bols.

Selon un second mode de réalisation, le présentoir est entraîné en rotation de manière continue par un moteur de préférence électrique et par un train d'engrenages réducteur et la commande des outils s'effectue par des rampes et des cames le long desquels ils se déplacent. Les moyens destinés à briser la coquille comportent des couvercles supérieurs fermant l'orifice d'entrée de chaque bol et un marteau inférieur déplaçable le long d'une rampe de manière à se rapprocher successivement de chacun des couvercles. Préférentiellement, les couvercles sont articulés sur le présentoir au voisinage de chaque bol et relevés par des poussoirs entraînés par ledit présentoir le long de rampes fixes. Les moyens d'éclatement comportent un éclateur tubulaire entourant le marteau inférieur et se déplaçant avec celui-ci, selon ce second mode de réalisation, les moyens d'éjection de chaque bol sont essentiellement constitués par un orifice ménagé dans chaque couvercle supérieur et relié à la source de fluide comprimé, par une vanne d'injection à poussoir contrôlant l'ouverture dudit orifice et par une came de commande des poussoirs desdites vannes.

Quant au nettoyage des bols, il est assuré par un jet de fluide comprimé expulsant les débris de coquille.

L'invention va maintenant être décrite plus en détail en se référant à des modes de réalisation particuliers cités à titre d'exemples non limitatifs et représentés sur les dessins annexés dans lesquels :

Fig. 1 représente une coupe axiale d'une machine selon un premier mode de réalisation de l'invention.

Fig. 2 représente une vue de dessus de la machine de la figure 1 avec une portion arrachée.

Fig. 3 illustre les différentes opérations de traitement des oeufs durs aux différents postes de travail de la machine représentée sur les figures 1 et 2.

Fig. 4 représente une coupe axiale d'une machine selon un second mode de réalisation de l'invention.

Fig. 5 représente une vue agrandie de la partie supérieure droite de la machine de la figure 4.

Fig. 6 représente une vue de dessus de la machine de la figure 4 avec le présentoir enlevé,et

Fig. 7 représente une vueagrandie en perspective d'une noix d'entraînement.

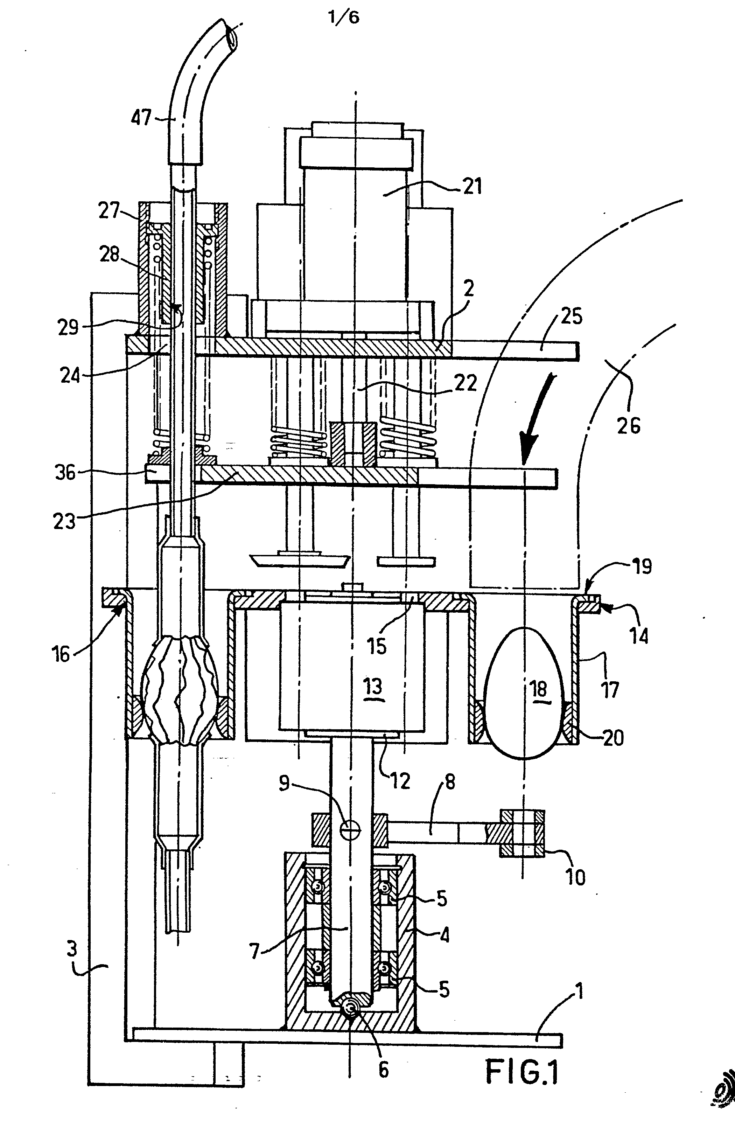

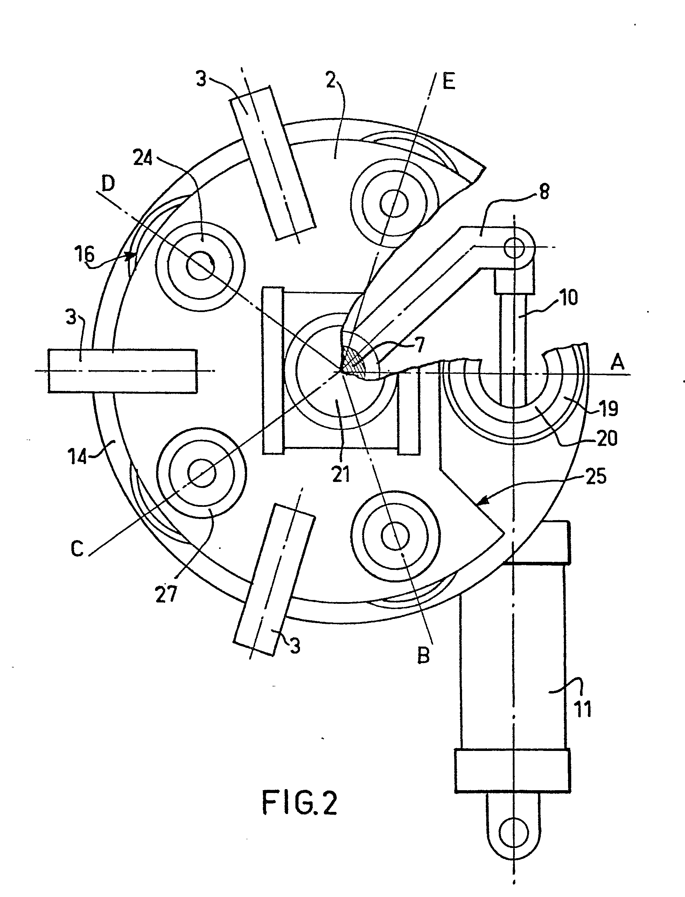

Telle que représentée sur la figure 1, la machine selon un premier mode de réalisation comporte un bâti porteur essentiellement constitué par un plateau inférieur horizontal 1, un plateau supérieur également horizontal 2 et des montants verticaux latéraux 3 reliant entre eux lesdits plateaux et supportant le plateau supérieur 2 à l'aplomb du plateau inférieur 1. Au centre du plateau inférieur 1, est fixée une crapaudine 4 dans laquelle sont logés deux roulements à billes 5 superposés et une bille 6 reposant sur le fond de la crapaudine au centre de celle-ci. Un arbre vertical 7 est monté tournant dans ladite crapaudine 4 de manière à reposer en bout sur la bille 6. Une extrémité d'un levier horizontal 8 est rendue solidaire en rotation de l'arbre support vertical 7 au moyen d'une goupille 9, l'autre extrémité dudit levier 8 étant articulée à l'extrémité libre de la tige 10 d'un vérin d'entraînement en rotation 11 (voir figure 2) qui est fixe et qui peut être un vérin hydraulique, électrique ou mécanique.

A l'extrémité supérieure de l'arbre support vertical 7, est claveté le moyeu 12 d'une roue libre dont la jante 13 supporte un plateau circulaire horizontal 14 centré et fixé sur ladite jante au moyen de vis 15. Ce plateau 14 comporte, régulièrement réparties à sa périphérie, cinq ouvertures circulaires 16 dans lesquelles sont logés des bols 17 récepteurs d'oeufs durs 18. Les bols 17 comportent un corps cylindrique tubulaire ouvert aux deux bouts et muni à son extrémité supérieure d'une collerette de retenue 19 servant à supporter le bol le long du bord de l'ouverture 16 dans laquelle il se trouve logé, l'extrémité inférieure dudit bol étant muni d'un renflement annulaire 20 déterminant dans le fond du bol une ouverture circulaire étranglée dont le diamètre est légèrement inférieur au plus fort diamètre des oeufs durs.

Le plateau 14 porteur des cinq bols récepteurs 17 ainsi que l'arbre support 7 auquel il est accouplé et qui tourne dans le palier fixe constitué par la crapaudine 4 forment un présentoir pivotant d'oeufs durs dont l'entraînement en rotation est assuré de manière discontinue par le levier coudé 8 et par le vérin fixe 11.

Le plateau supérieur 2, disposé à l'aplomb du plateau inférieur 1 et du plateau rotatif 14 du présentoir, supporte en son centre un vérin de rappel 21 dont la tige 22 coulisse dans le prolongement de l'arbre rotatif 7 du présentoir et supporte un plateau de rappel horizontal 23 vissé en son centre à l'extrémité libre de ladite tige.

Le plateau supérieur 2 comporte une série de découpes régulièrement réparties à sa périphérie selon des directions formant entre elles des angles de 72°. Quatre de ces découpes 24 sont circulaires et identiques, et leurs centres sont situés à la même distance de l'axe de l'arbre vertical 7 que les axes verticaux des bols récepteurs 17 supportés par le plateau 14 du présentoir. La cinquième découpe du plateau 2 est une encoche 25 ménagée sur son bord de manière à laisser passer une goulotte d'approvisionnement 26 débouchant à l'aplomb de la trajectoire des bols récepteurs 17 supportés par le plateau 14 du présentoir, ladite goulotte délivrant un oeuf dur par bol qui se présente sous celle-ci.

Dans le prolongement des quatre ouvertures circulaires 24 du plateau 2 sont fixés audit plateau 2 des manchons tubulaires verticaux 27 filetés intérieurement à leur partie supérieure et dnns lesquelles sont vissées des douilles 28 de retenue et de guidage, lesdites douilles comportant un alésage central 29 dans lequel peuvent coulisser les queues cylindriques des outils d'épluchage décrits ci-après.

A chaque découpe 24 pratiquée dans le plateau supérieur 2 de la machine, correspond un poste de travail muni d'outils particuliers réalisant chacun automatiquement une opération d'épluchage des oeufs durs délivrés un par un par la goulotte 26 dans chacun des bols récepteurs 17 portés et entraînés en rotation par le plateau 14 du présentoir rotatif.

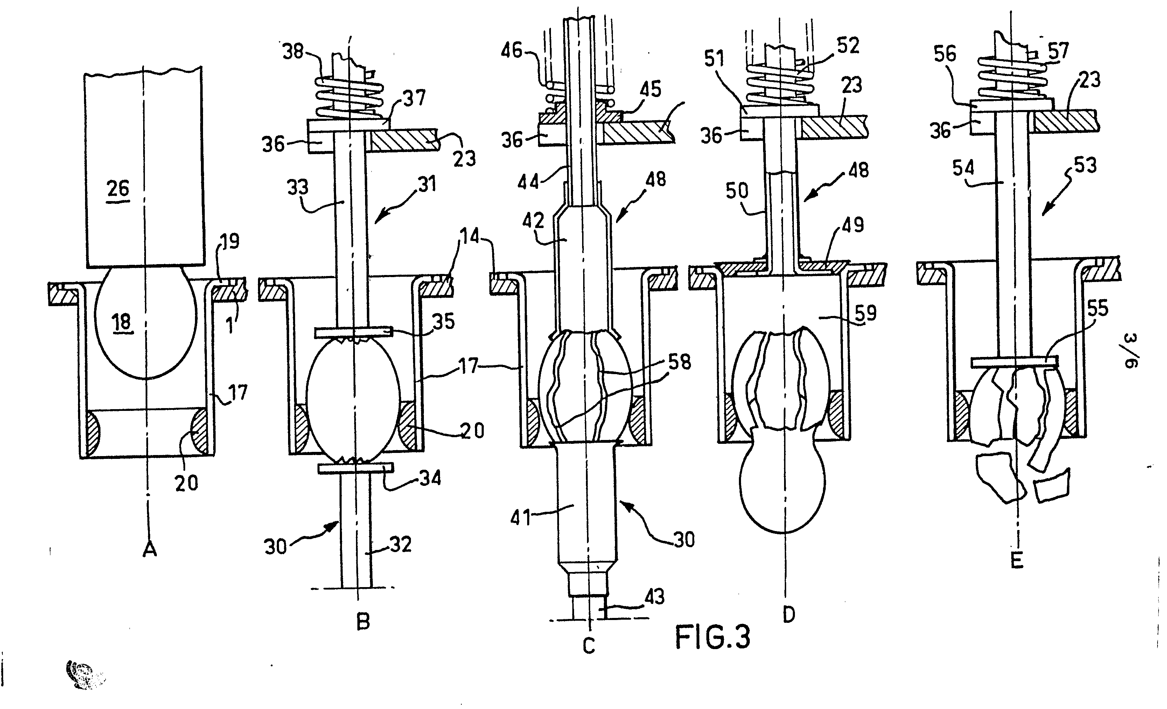

Sur la figure 2, les différents postes de travail sont référencés A, B, C, D et E, le poste A étant le poste d'alimentation du présentoir en oeufs durs, ledit poste comportant le distributeur d'oeufs que constitue la goulotte 26 précédemment mentionnée. En tournant dans le sens de rotation du présentoir qui, sur la figure 2, est le sens de rotation des aiguilles d'une montre, chaque bol récepteur 17 porté par le plateau 14 est chargé d'un oeuf dur 18 qui vient de lui être délivré par la goulotte 26 et il rencontre d'abord un poste de percussion B muni de deux marteaux opposés 30, 31 alignés verticalement dans le prolongement l'un de l'autre sur l'axe vertical d'une des découpes circulaires 24 du plateau supérieur 2. Lesdits marteaux 30 et 31 sont identiques et constitués chacun par une tige, respectivement 32 et 33, munie en bout d'une plaque de percussion horizontale, respectivement 34, 35, les deux plaques 34, 35 étant disposées en vis-à-vis de part et d'autre du trajet horizontal circulaire parcouru par les bols 17 et les oeufs durs qu'ils transportent. La tige 33 du marteau supérieur 31 (voir figure 3) traverse le plateau de rappel 23 par une encoche 36 prévue à cet effet et se prolonge verticalement à travers une ouverture circulaire 24 du plateau supérieur 2 de l'appareil de manière à coulisser dans une douille de guidage 28 vissée dans un manchon 27 fixé sur ledit plateau. La tige 33 est munie d'une rondelle de butée 37 fixée sur celle-ci et destinée à retenir un ressort de compression 38 enfilé sur la tige 33 et sur la douille supérieure 28 dans laquelle ladite tige coulisse, ce ressort 38 étant retenu à ses deux extrémités entre, d'une part, la douille supérieure de guidage 28 et, d'autre part, la rondelle inférieure 37 solidaire de la tige 33.

Le poste suivant rencontré par un bol porteur d'oeufs durs dans sa rotation est un poste d'éclatement C qui comporte deux éclateurs tubulaires opposés, respectivement 39, 40, alignés verticalement dans le prolongement l'un de l'autre sur l'axe vertical de la découpe circulaire 24 adjacente ménagée dans le plateau supérieur 2. Lesdits éclateurs 39, 40 sont susceptibles de coulisser l'un vers l'autre verticalement de manière à se rapprocher ou à s'écarter du centre des bols porteurs d'oeufs durs qui se présentent au poste d'éclatement. Chaque éclateur 39 ou 40 est essentiellement composé d'un embout tubulaire, respectivement 41, 42, légèrement évasé à une extrémité, et d'un tube vertical, respectivement 43, 44, coulissant fixé à l'autre extrémité de l'embout respectif dans lequel il débouche. Le tube supérieur 44 (figure 3) traverse le plateau de rappel 23 de l'appareil par une des encoches 36 de celui-ci et peut coulisser comme la tige 33 du marteau 31 précédemment décrit dans une douille de guidage 28 également montée dans un manchon 27 à l'aplomb d'une ouverture circulaire 24 du plateau supérieur 2, ce tube 44 étant muni d'une rondelle de butée 45 emmanchée et fixée, par exemple par soudure, sur ledit tube, tandis qu'un ressort de compression 46 est enfilé sur le tube 44 et emprisonné entre ladite rondelle de butée 45 et la douille supérieure 28 dans laquelle coulisse le tube 44. A l'extrémité supérieure du tube 44 qui dépasse au-dessus de son manchon 27 est branché un tuyau souple 47 (voir figure 1) qui est relié à une source de fluide comprimé non représentée, ladite source pouvant être soit une pompe destinée à envoyer de l'eau sous pression, notamment dans les éclateurs, soit encore un compresseur d'air destiné à la même fonction.

Le poste suivant de la machine (voir figures 2 et 3), est un poste dit d'éjection D muni d'un éjecteur, également alimenté en fluide comprimé par la source précitée et essentiellement composé d'un disque horizontal 49 percé en son centre et d'un tube vertical 50 débouchant au centre du disque 49 comporte un contour circulaire à bords tronconiques susceptibles d'épouser de manière étanche le bord de l'orifice d'entrée des bols récepteurs 17 contenant les oeufs durs. Quant au tube 50, il se prolonge verticalement à travers une découpe 36 ménagée dans le plateau de rappel 23 de l'appareil, et à travers une ouverture 24 du plateau supérieur 2, ledit tube 50 étant monté coulissant, comme le tube 44 de l'éclateur 40 et comme la tige 33 du marteau 31, dans une douille 28 vissée à l'intérieur d'un manchon 27 fixé sur le dessus du plateau supérieur 2 à l'aplomb d'une ouverture 24 ménagée dans celui-ci. Ce tube 50 est muni d'une rondelle de butée 51 qui lui est solidaire, et un ressort de compression 52 est enfilé sur ledit tube et emprisonné entre ladite rondelle de butée 51 et la douille de guidage supérieure 28 dans laquelle coulisse le tube 50. L'extrémité supérieure dudit tube est également reliée, comme celle du tube 44 de l'éclateur 40, à la source de fluide comprimé par l'intermédiaire d'un tuyau souple non représenté.

Enfin, le quatrième et dernier poste de travail E de la machine est un poste de nettoyage comprenant un poussoir 53 ressemblant aux marteaux 31 et 32 précités et comportant une tige verticale 54 munie à son extrémité libre inférieure d'une plaque de poussée circulaire horizontale 55 dont le diamètre est voisin mais légèrement inférieur au diamètre de l'orifice de sortie étranglé ménagé au fond des bols récepteurs 17 par le renflement annulaire 20 prévu dans ceux-ci. De la même manière que les tiges 33 et les tubes 44 et 50 des autres outils d'épluchage décrits précédemment, la tige 54 traverse vers le haut le plateau 23 par une encoc e 36 et peut coulisser à l'intérieur d'une douille 28 vissée dans un manchon 27 fixé sur le dessus du plateau supérieur à l'aplomb d'une découpe circulaire 24 de celui-ci. La tige 54 porte une rondelle de butée 56 qui lui est solidaire et un ressort de compression 57 est enfilé sur ladite tige et emprisonné à ses extrémités entre la rondelle 56 et la douille de guidage 28 dans laquelle la tige 54 peut coulisser.

On notera que tous les outils de travail décrits précédemment à savoir les marteaux, les éclateurs, l'éjecteur et le poussoir, sont tous sollicités en permanence par leurs ressorts de compression associés en direction du plateau 14 du présentoir, le maintien en position rétractée desdits outils étant obtenu par le plateau de rappel 23 tiré vers le haut par la tige 22 du vérin supérieur de commande 21 qui est porté par le plateau supérieur 2. L'abaissement du plateau de rappel 23 permet d'obtenir le déplacement simultané de tous les outils en direction des bols récepteurs 17 situés à l'aplomb de ceux-ci.

La machine automatique à éplucher les oeufs durs selon l'invention telle que décrite précédemment fonctionne de la façon suivante (voir figure 3) :

14

La plateau 14 du présentoir étant immobilisé de telle sorte qu'un bol récepteur se trouve disposé à l'aplomb de chacun des postes de travail de la machine, et notamment sous l'embouchure de la goulotte de distribution 26, un oeuf dur à éplucher 18 est amené par lddite goulotte dans unbol 17 disposé sous celle-ci. L'oeuf 18 tombe au fond dudit bol et est retenu en position debout par le renflement annulaire 20 qui étrangle l'orifice de sortie du bol (figure 3A).

Le plateau 14 du présentoir avec les bols qu'il supporte sont alors entraînés en rotation dans le sens des aiguilles d'une montre sur un angle de 72° par le levier coudé 8 et la tige 10 du vérin 11 qui se rétracte. Le bol 17 contenant l'oeuf dur à éplucher 18 est ainsi amené à l'aplomb du poste de percussion B entre les deux marteaux 30 et 31 dudit poste. La tige 22 du vérin 21 est alors mise en extension, ce qui abaisse le plateau de rappel 23 et permet le rapprochement des deux marteaux 30 et 31 qui sont sollicités l'un vers l'autre par leurs ressorts de compression, les plaques de percussion 34 et 35 desdits marteaux percutant et brisant la coquille de l'oeuf dur à ses deux extrémités opposées inférieure et supérieure. La tige 22 du vérin de rappel 21 est ensuite rétractée, ce qui provoque le soulèvement du plateau 23, la compression des ressorts sollicitant les outils, et le déplacement de ceux-ci en retrait par rapport aux bols récepteurs contenant les oeufs durs qui peuvent alors tourner d'un cran avec le plateau 14 du présentoir sous l'impulsion du vérin 11, ce qui provoque un pivotement de 72° des bols récepteurs dans le sens des aiguilles d'une montre de telle sorte que l'oeuf dur 18 dont les deux bouts supérieur et inférieur viennent d'être brisés par les marteaux 30 et 31 du poste B, est amené au poste C en coïncidence avec l'axe des éclateurs tubulaires 39 et 40. La tige 22 du vérin 21 de rappel est à nouveau mise en extension, provoquant ainsi l'abaissement du plateau 23 et le rapprochement des deux éclateurs 39 et 40 dont les extrémités évasées de leurs embouts tubulaires 41 et 42 viennent s'appliquer de manière étanche sur les deux extrémités brisées de la coquille de l'oeuf dur 18 (voir figure 3 C). Lorsque l'oeuf dur 18 à éplucher est ainsi pris entre les deux éclateurs 39 et 40, le fluide comprimé, qui peut être de l'eau ou de l'air, est envoyé par la source de fluide à travers le tuyau souple 47 et les tubes 43,44 dans les deux embouts 41 et 42. Sous l'effet de la pression, le fluide pénètre entre le blanc de l'oeuf et la membrane qui est collée à la coquille et provoque la fissuration de celle-ci et son éclatement le long de fissures longitudinales 58 (figure 3 C).

L'arrivée de fluide comprimé est ensuite interrompue et les éclateurs 39, 40 sont rétractés par le soulèvement du plateau 23 tiré par la tige 22 du vérin de rappel 21, ce qui libère le passage des bols 17 qui sont à nouveau entraînés en rotation sur un angle de 72° par le vérin d'entraînement 11 et le levier coudé 8 claveté sur l'arbre 7 du présentoir, ceci amène l'oeuf fissuré longitudinalement au poste d'éjection D où l'abaissement du plateau 23 provoque la fermeture étanche de l'orifice d'entrée du bol 17 par le bouchon circulaire 49 de l'éjecteur 48. Du fluide comprimé, air ou eau, est alors envoyé par la source à travers les tuyaux souples 47 et le tube 50 de l'éjecteur, ce qui met sous pression la cavité interne 59 du bol, ladite pression repoussant le blanc de l'oeuf hors de sa coquille fissurée et hors du bol lui-même à travers son ouverture de sortie étranglée ménagée au fond dudit bol; l'éjection s'effectuant sans difficulté du fait que le blanc de l'oeuf n'adhère plus à la membrane, qui reste collée à la coquille, et que ce blanc, qui est déformable, s'étire de manière élastique pour passer à travers ladite ouverture étranglée. Il y a à nouveau interruption de l'arrivée du fluide comprimé, puis relèvement du plateau 23 par le vérin de rappel 21, avec retrait de l'éjecteur 48 à l'écart du trajet des bols 17, lesquels effectuent encore une rotation de 72° toujours dans le sens des aiguilles d'une montre de telle sorte que le bol 17 qui ne contient plus que la coquille fissurée de l'oeuf se trouve disposé à l'aplomb du poste de nettoyage E sous le poussoir 53. L'extension de la tige 22 du vérin 21 suivie de l'abaissement du plateau 23 provoque la descente du poussoir 53 à l'intérieur du bol 17 et le refoulement des débris de coquille par la plaque 55 du poussoir hors du bol 17 à travers l'ouverture étranglée du fond dudit bol (cf. figure 3 E).

Le relevage du plateau 23 provoque le retrait du poussoir 53 à l'écart du trajet des bols 17 et une nouvelle rotation de ceux-ci de 72°, de telle sorte que le bol qui vient d'être nettoyé est à nouveau situé sous l'embouchure de la goulotte d'alimentation 26 Du distributeur qui délivre un nouvel oeuf dur dans le bol vide et le cycle recommence.

Bien entendu, tous les outils fonctionnent en même temps, si bien qu'après chaque abaissement du plateau 23 la machine automatique selon l'invention réalise simultanément la percussion simultanée des deux extrémités opposées d'un premier oeuf dur, la fissuration longitudinale de la coquille d'un second oeuf dur située en position adjacente, l'éjection du blanc hors de la coquille fissurée d'un troisième oeuf dur, et le refoulement des débris de la coquille vide d'un quatrième oeuf dur hors de son bol récepteur.

Le rendement de la machine est fonction de la vitesse de rotation du plateau du présentoir et de la cadence de fonctionnement des outils de l'appareil desquels sont variables à volonté en agissant sur la commande du vérin d'entraînement 11 et de rappel 21 dont les cadences sont mutuellement asservies, de telle sorte que, après chaque rétraction de la tige 10 du vérin d'entraînement en rotation 11 succède une mise en extension de la tige 22 du vérin de rappel 21 et vice-versa.

Le blanc d'oeuf éjecté au poste d'éjection D tombe sur une grille ou dans une goulotte de dégagement tandis que le fluide comprimé, s'il s'agit d'un liquide, est recueilli sous la machine et recyclé à la source. De même, les débris de coquille refoulés au poste de nettoyage E sont recueillis dans un bac situé sous la machine et évacués.

Le vérin d'entraînement 11 peut être évidemment remplacé par n'importe quel autre moyen d'entraînement discontinu tel que par exemple, un moteur électrique pas à pas dont l'arbre porte un pignon engrenant sur un engrenage fixé sur l'arbre support 7 du plateau 14 du présentoir.

De même, le mouvement vertical du plateau de rappel 23 peut être assuré autrement que par un vérin de rappel, et notamment par une came rotative montée en bout d'arbre d'un moteur électrique tournant en continu à faible vitesse, ladite came servant à repousser vers le bas le plateau de rappel 23 à intervalles réguliers en synchronisation avec l'entraînement en rotation du présentoir.

Dans l'exemple décrit précédemment, les différents plateaux, et notamment le plateau du présentoir, sont prévus horizontaux, mais bien entendu, lesdits plateaux peuvent occuper une position intermédiaire oblique ou encore être disposés verticalement et tourner autour d'axes horizontaux, ce qui ne change évidemment rien au principe de l'invention.

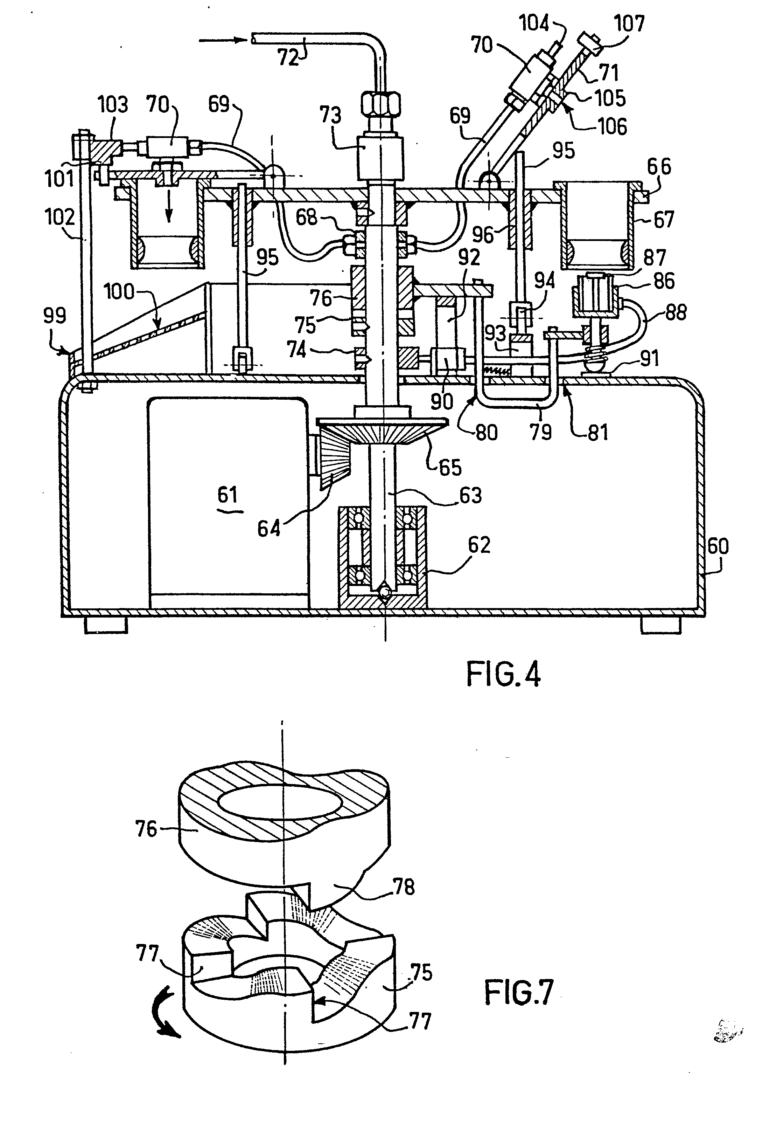

Les figures 4 à 7 concernent un second mode de réalisation d'une machine à éplucher les oeufs mettant en oeuvre le procédé selon l'invention.

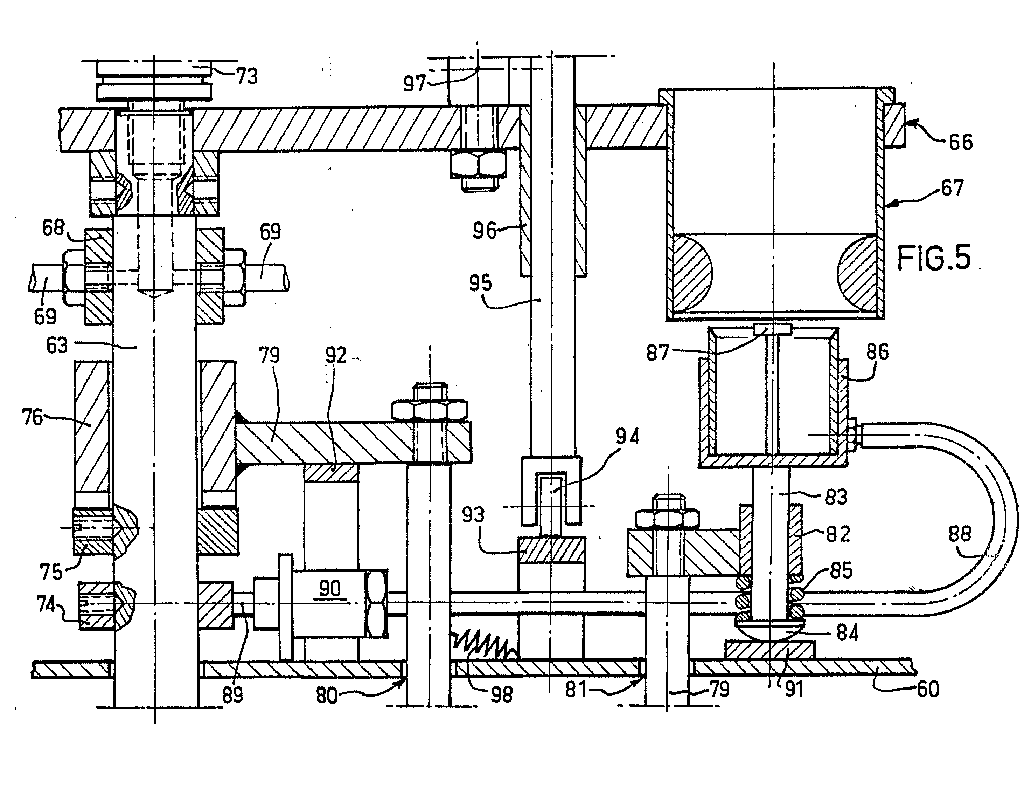

Cette machine comporte un carter 60 (figure 4) à l'intérieur duquel sont logés un moteur électrique d'entraînement 61 et une crapaudine 62 supportant verticalement un arbre 63 qui traverse la paroi supérieure du carter, l'entraînement en rotation dudit arbre s'effectuant par l'intermédiaire d'un train réducteur de pignons coniques 64 et 65 en prise permanente. A la partie supérieure de l'arbre 63 est fixé un plateau circulaire horizontal 66 percé de quatre orifices circulaires régulièrement répartis à sa périphérie dans lesquels sont logés quatre bols récepteurs 67 analogues aux bols 17 décrits précédemment. L'extrémité supérieure de l'arbre 63 est percée longitudinalement et l'alésage ainsi constitué débouche par quatre conduits radiaux (figure 5) dans une bague distributrice 68 montée serrée sur l'arbre.Dans cette bague sont vissés des embouts filetés de quatre conduits d'alimentation 69 dont les autres extrémités sont reliées à quatre vannes 70 à poussoirs montées sur quatre couvercle 71 articulés d'un côté sur le plateau 66 et destinés à obturer les orifices d'entrée des quatre bols récepteurs 67.Un conduit 72(figure 4)est connecté par l'intermédiaire d'un joint tournant 73 à l'entrée de l'alésage de l'arbre 63 et l'autre extrémité dudit conduit est reliée à une source de fluide sous pression tel que de l'eau sous pression ou de l'air comprimé non représentée.

Sur la portion d'arbre 63 comprise entre la paroi supérieure du carter 60 et la bague 68 de distribution de fluide (figures 4 et 5), sont enfilées respectivement de bas en haut une came 74 et une noix d'entraînement à griffes 75,toutes deux clavetées sur l'arbre,ainsi qu'un manchon coulissant 76 monté libre en rotation. Cette noix 75 et ce manchon 76 sont représentés plus en détail sur la figure 7,la noix 75 qui est fixée en rotation sur l'arbre 63,comportant quatre griffes d'entraînement 77 susceptibles de venir en prise à tour de rôle avec une dent 78 en saillie à la partie inférieure du manchon 76 monté libre sur l'arbre 63,aussi bien en rotation qu'axialement. La noix 75 et le manchon 76 constituent des moyens d'entraînement à échappement.

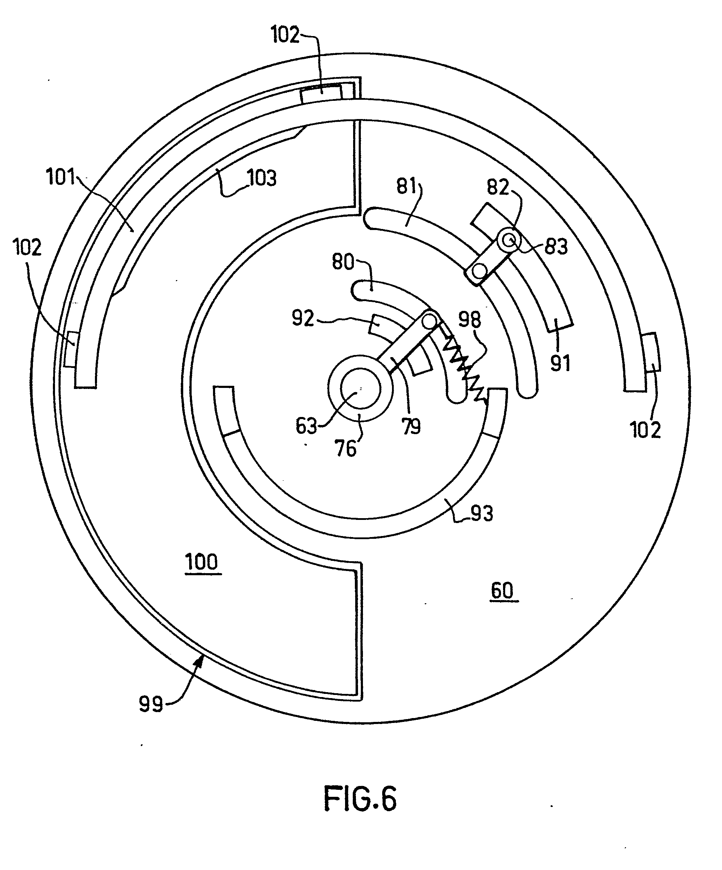

Au manchon 76 est soudé un bras 79(figures 4,5)en forme de manivelle dont les branches verticales de la partie en U traversent la paroi supérieure du carter 60 dans des lumières en arc de cercle 80 et 81 concentriques centrées sur l'axe de l'arbre 63 (voir figure 6),lesdites lumières circulaires s'étendant sur environ un quart de circonférence. A l'extrémité libre du bras 79 est soudé un manchon 82 (figure 5) dans lequel est monté coulissante une tige verticale 83 munie à sa partie inférieure d'un patin hémisphérique 84 et sollicitée vers le bas par un ressort de rappel 85 enfilé sur ladite tige entre le patin 84 et le manchon82, la partie supérieure de cette tige étant fixée au fond d'un éclateur cylindrique 86 ouvert vers le haut et muni en son centre d'un marteau axial 87 destiné à briser la coquille des oeufs à éplucher. L'éclateur 86 est relié par un tuyau souple 88 à une source de fluide sous pression (air ou eau) non représentée, l'alimentation en fluide étant commandée par la came 74 agissant sur le poussoir 89 d'une vanne 90 intercalée dans le circuit (figure 5). L'éclateur 86 avec son marteau 87 et sa tige coulissante 83 sont mobiles vers le haut en direction des bols récepteurs 67 sous la poussée du patin 84 progressant le long d'une rampe inclinée 91 portée par la paroi supérieure du carter 60, ladite rampe étant en arc de cercle et centrée sur l'axe de rotation du bras 79. Deux autres rampes 92 et 93 en arcs de carcle (figure 6) concentriques centrés sur l'axe de l'arbre 63 sont portées par la paroi supérieure du carter 60. La première rampe 92 est disposé sous la partie horizontale du bras 79 qui est soudé au manchon 76 et, dans la zone de fin de course dudit bras, la surface supérieure de ladite rampe s'élève à un niveau tel que la dent 78 du manchon 76 est dégagée des griffes 77 de la noix d'entraînement 75 (figure 5).

La seconde rampe 93 s'étend sur un demicercle et sert de piste de roulement à quatre galets 94 montés rotatifs à la partie inférieure de quatre poussoirs verticaux 95 associés chacun à un couvercle 71 de bol récepteur 67, lesdits poussoirs étant montés coulissants dans des manchons verticaux 96 traversant le plateau présentoir 66 et fixés sur celui-ci entre les bols récepteurs 67 et les articulations 97 de leurs couvercles 71. La longueur des poussoirs est choisie telle qu'ils n'atteignent pas les couvercles 71, lorsque leurs galets 94 ne roulent pas sur la rampe 93 et qu'ils les soulèvent quand les galets parcourent ladite rampe comme représenté respectivement sur les parties gauche et droite de la figure 4. Un ressort de traction 98 relie une branche verticale du bras 79 à la paroi supérieure du carter 60 (figure 5), ce ressort servant à rappeler le bras 79 en arrière lorsque la dent d'entraînement 78 du manchon 76 n'est plus en prise avec une griffe 77 de la noix 75.

La machine comporte en outre un bac en arc de cercle 99 fixé sur le capot 60 sous la trajectoire circulaire des bols récepteurs 67, ce bac servant à recueillir les débris de coquille et l'eau refoulée à travers les bols. Le bac 99 comporte des moyens d'écoulement classiques non représentés et une grille inclinée 100 servant de filtre.

Une rampe de verrouillage semi-circulaire 101 est montée à l'extrémité supérieure de montants verticaux 102 fixés sur le carter 60, ladite rampe s'étendant du côté opposé à la rampe 93 périphériquement en demi-cercle et à un niveau légèrement supérieur au plateau présentoir 66.

La rampe 101 supporte une came curviligne 103 de commande d'injection de fluide comprimé dans les bols 67, ladite came servant à repousser les poussoirs 104 assurant l'ouverture des vannes 70 montées sur les couvercles 71. Chaque couvercle 71 comporte un marteau central 105 traversé en son milieu par un conduit d'injection de fluide 106 alimenté par une vanne 70 et un tuyau souple 69 (figure 4) et, du côté opposé à son articulation 97 sur le plateau 66, chaque couvercle est muni d'un galet périphérique 107 pouvant s'engager sous la rampe 101 pour verrouiller les couvercles 71 en position de fermeture.

La disposition réciproque des différentes rampes, cames et lumières est représentée sur la vue de dessus de la figure 6. Sur cette figure, on voit que la rampe de verrouillage 101 s'étend à la périphérie du présentoir et du capot 60 sur toute une demi-circonférence. Le bac circulaire 99 s'étend également en une demi-circonférence mais celle-ci est décalée de 90° dans le sens inverse des aiguilles d'une montre par rapport à la rampe de verrouillage 101.

La rampe 93 qui sert de piste de roulement aux galets 94 et commande l'ouverture des couvercles 71 s'étend aussi sur un demi-cercle décalé de 90° dans le sens anti-horaire par rapport au bac circulaire 99 autrement dit, la rampe 93 d'ouverture s'étend bien évidemment sur une demi-circonférence opposée à la rampe de verrouillage 101.

Quant aux deux rampes 91 et 92 agissant respectivement sur le patin 84 de l'éclateur et sur le bras support 79 ainsi que les deux lumières 80 et 81 de passage dudit bras à travers le capot 60, elles s'étendent concentriquement dans le secteur délimité périphériquement par la première moitié de la rampe de verrouillage 101 considérée dans le sens anti-horaire, la came 103 de commande d'injection étant supportée par la seconde moitié de la rampe de verrouillage et s'étendant sur environ les deux tiers de ladite moitié.

La machine selon ce second mode de réalisation fonctionne de la manière suivante.

Le groupe moto-réducteur 61, 64, 65 entraîne en rotation à vitesse constante, dans le sens inverse des aiguilles d'une montre et selon un mouvement continu, à la fois l'arbre 63, la came 74, la noix 75, la bague 68 et le plateau présentoir 66 qui sont solidaire entre eux. Dans sa rotation, le plateau 66 entraîne à la fois les bols récepteurs 67 et leurs couvercles 71 équipé des vannes 70 ainsi que les poussoirs 95 dont les galets 94 roulent alternativement sur le capot 60 et sur la rampe 93. Lorsqu'un galet 94 roule sur la rampe 93, le poussoir 95 associé est remonté et soulève le couvercle 71 correspondant, ouvrant ainsi l'orifice d'entrée du bol récepteur 67 associé qui peut recevoir un oeuf dur à éplucher amené automatiquement par une goulotte d'approvisionnement non représentée sur les figures 4 à 6 mais analogue à la goulotte 26 de la figure 1. L'oeuf dur se positionne verticalement dans le bol récepteur où il est retenu par l'étranglement inférieur dudit bol, le bout inférieur de l'oeuf dépassant au-dessous de celui-ci. Pour ne pas risquer de cisailler l'oeuf au moment de son introduction dans le bol du fait que le plateau 66 n'interrompt pas son mouvement de rotation, on peut prévoir une goulotte suiveuse qui accompagne le bol à approvisionner pendant quelques instants.

Lorsque le galet 94 arrive en bout de rampe 93 et descend de celle-ci, il provoque le retrait de son poussoir 95 et la fermeture du couvercle 71 associé dont le marteau 105 vient reposer sur le bout supérieur de l'oeuf contenu dans le bol et dont le galet de verrouillage 107 s'engage à l'entrée de la rampe de verrouillage 101 ce qui amorce l'écrasement dudit bout de la coquille simultanément, le dent 78 du manchon coulissant 76 vient en prise avec une des quatre griffes 77 de la noix d'entraînement 75 provoquant une rotation de 70° environ du bras-manivelle 79 et de son éclateur 86 associé dont le patin 84 remonte le long de la rampe 91. A mesure que la rotation du présentoir continue et que le patin 84 progresse le long de la rampe 91, le marteau 87 de l'éclateur vient écraser le bout inférieur de la coquille que l'échateur coiffe ensuite.

Lorsque l'oeuf est ainsi coincé entre le marteau supérieur 105 du couvercle et le marteau inférieur 87 et coiffé à sa base par l'éclateur 86, la came tournante 74 qui comporte autant de renflements qu'il y a de bols sur le présentoir (quatre dans l'exemple considéré) repousse le poussoir 89 de la vanne fixe 90, ce qui ouvre celle-ci et provoque l'arrivée du fluide sous pression tel que de l'eau dans l'éclateur 86. Cette eau sous pression pénètre dans la coquille de l'oeuf par son bout inférieur écrasé et s'infiltre entre le blanc de l'oeuf et la peau de la coquille, faisant éclater celle-ci.

Dans sa progression anti-horaire, le patin 84 descend alors de la rampe 91, ce qui libère la base de l'oeuf du fait du retrait vers le bas du marteau 87 et de l'éclateur 86. La partie horizontale du bras 79 soudée au manchon 76 continue à progresser le long de la rampe 92 et arrive au sommet de celle-ci; le manchon 76 est alors soulevé au maximum ce qui dégage sa dent 78 de la prise de la griffe correspondante 77 de la noix d'entraînement 75 et autorise le rappel du bras 79 en arrière par le ressort de rappel 98 tandis que le bol 67 contenant l'oeuf pénètre au dessus du bac 99 et que l'extrémité du poussoir 104 de la vanne 70 fixée sur le couvercle 71 amorce son contact avec la came d'injection 103. A mesure que le bol 67 continue à tourner, le poussoir 104 est repoussé par la came 103 et provoque l'ouverture de la vanne 70 et l'injection de l'eau sous pression à travers l'orifice 106 du couvercle. Ce dernier étant fermement verrouillé par son galet 107 et la rampe 101, la pression dans le bol 67 s'élève et l'oeuf dur est expulsé à travers l'étranglement du fond du bol et tombe sur la grille 100 du bac 99 qui recueille l'eau injectée. Le bol vide continue sa rotation au-dessus du bac circulaire 99 tandis que le galet 107 du couvercle 71 sort de dessous la rampe de verrouillage 101 et que le galet 94 du poussoir 95 correspondant monte sur la rampe d'ouverture 93, ce qui relève le couvercle. Le bol vide 67 est alors nettoyé par un jet de fluide sous pression, tel que de l'eau ou de l'air comprimé, dirigé soit par dessus soit par dessous, le jet de nettoyage expulsant les derniers débris de coquille restant encore dans le bol, lequel se présente à nouveau à la sortie de la goulotte d'approvisionnement pour recevoir un nouvel oeuf à éplucher et le cycle recommence. Une circulation continue d'eau peut être prévue dans le bac 99 pour évacuer en permanence les débris de coquille et un système d'évacuation automatique des oeufs épluchés peut également être associé à la machine; en outre, l'eau recueillie dans le bac 99 peut éventuellement être recyclée après filtrage.

La machine selon l'invention permet d'éplucher de matière entièrement automatique une très grande quantité d'oeufs durs à l'heure et sans qu'aucune intervention manuelle complémentaire ne soit nécessaire du fait que l'oeuf épluché éjecté du bol au poste d'éjection n'entraîne pas avec lui la calotte inférieure de la coquille brisée.

Bien entendu, la portée de l'invention n'est pas limitée au seul mode de réalisation décrit ci-dessus, mais elle couvre également toutes les variantes qui ne différeraient que par des détails.

## REVENDICATIONS

1. Procédé d'épluchage des oeufs durs dans lequel on injecte un fluide sous pression entre la membrane et le blanc, caractérisé en ce qu'on injecte le fluide aux deux extrêmités de l'oeuf.

2. Machine automatique pour la mise en oeuvre du procédé selon la revendication 1, ladite machine comportant un bâti porteur, plusieurs bols récepteurs d'oeufs durs ayant un orifice d'entrée et un fond muni d'une ouverture circulaire étranglée dont le diamètre est légèrement inférieur au plus gros diamètre des oeufs, ainsi qu'une source de fluide comprimé, caractérisée en ce qu'elle comprend en outre :

- un présentoir mobile (14,66) portant les bols récepteurs (17,67),
- des moyens (11,61) d'entraînement du présentoir,
- un poste d'alimentation ayant un distributeur (26) délivrant un oeuf dur par bol qui se présente,
- des moyens (30, 31, 87, 105) destinés à briser la coquille des oeufs à chaque extrémité de ceux-ci,
- des moyens d'éclatement (41, 42, 87) reliés à la source de fluide comprimé et servant à injecter le fluide sous pression à l'intérieur de la coquille, entre la membrane et le blanc de l'oeuf,
- des moyens d'éjection (48,71) reliés à la source de fluide comprimé, lesdits moyens étant agencés de manièce à pouvoir obturer hermétiquement l'orifice d'entrée des bols et mettre l'intérieur de ceux-ci sous pression pour refouler le blanc des oeufs hors de leur coquille à travers l'ouverture circulaire du fond des bols, et
- un poste de nettoyage muni de moyens destinés à refouler les débris de coquille hors des bols.

3. Machine selon la revendication 2,

caractérisée en ce que le présentoir comporte un plateau (14, 66) porteur des bols récepteurs (17,67) et un arbre support (7, 63) accouplé audit plateau et monté tournant dans un palier fixe (4, 62).

4. Machine selon la revendication 3, caractérisée en ce que les moyens d'entraînement du présentoir comportent un vérin fixe (11), un levier (8) dont une extrémité est articulée à la tige (10) du vérin et dont l'autre extrémité est solidaire en rotation de l'arbre support (7) et un joint d'accouplement à entraînement unidirectionnel entre le plateau et l'arbre support.

5. Machine selon la revendication 4, caractérisée en ce que le joint d'accouplement entre le plateau et l'arbre support est un dispositif de roue libre (13).

6. Machine selon la revendication 3, caractérisée en ce que les moyens d'entraînement du présentoir comportent un moteur électrique pas-à-pas et un engrenage accouplant l'arbre du moteur à l'arbre support qui est solidaire du plateau.

7. Machine selon la revendication 2, caractérisée en ce que les moyens destinés à briser la coquille comportent deux marteaux opposés alignés (34,35) sur un axe qui se confond avec l'axe des bols récepteurs présentés par le présentoir, lesdits marteaux étant situés de chaque côté du bol et déplaçables vers le bol sous l'action de moyens de commande du fonctionnement des outils, lesdits moyens étant asservis au déplacement du présentoir.

8. Machine selon la revendication 2, caractérisée en ce que les moyens d'éclatement comportent deux éclateurs tubulaires (41,42) opposés, alignés sur un axe qui se confond avec celui d'un bol récepteur présenté., lesdits éclateurs étant situés de chaque côté du bol et déplaçables vers lui sous l'action de moyens de commande du fonctionnement des outils.

9.Machine selon l'une quelconque des revendications 7 et 8,caractérisée en ce que les moyens de commande des outils comportent des ressorts (38,46,52 et 57) sollicitant indépendamment chaque outil en direction du plateau du présentoir,au moins un vérin (21) de rappel des outils en position rétractée et un moyen (23) de liaison entre la tige du vérin et lesdits outils.

10. Machine selon la revendication 2,caractérisée en ce que les moyens d'éjection comportent un bouchon (49) dont le contour épouse de manière étanche le bord de l'orifice d'entrée des bols récepteurs (17),ledit bouchon (49) étant déplaçable en direction des bols sous l'action des moyens de commande du fonctionnement des outils et comportant un orifice d'introduction de fluide comprimé dans le bol obturé.

11. Machine selon la revendication 3,caractérisée en ce que les moyens d'entraînement du présentoir comportent un moteur électrique continu(61) et un train d'engrenages réducteur (64,65) accouplant l'arbre du moteur à celui du présentoir.

12.Machine selon la revendication 2,caractérisée en ce que les moyens pour briser la coquille comportent d'une part des couvercles supérieurs (71) qui obturent l'orifice d'entrée de chaque bol récepteur(67) et d'autre part un marteau inférieur (87) monté coulissant à l'extrémité d'un bras (79)entraîné périodiquement sur une portion de circonférence par des moyens d'entraînement à échappement.

13.Machine selon la revendication 12,caractérisée en ce que les moyens d'entraînement à

échappement du bras (79) sont essentiellement constitués par une noix (75) à griffes, un manchon (76) coulissant solidaire du bras et muni d'une dent d'entraînement (78) engrènant avec les griffes (77) de la noix et une rampe (92) de dégagement de la dent (78) hors des griffes.

14. Machine selon la revendication 12, caractérisée en ce que les couvercles (71) sont articulés sur le présentoir et relevables par des poussoirs (95) entraînés par celui-ci et actionnés par une rampe d'ouverture (93).

15. Machine selon la revendication 12, caractérisée en ce que les moyens d'éclatement comportent un éclateur tubulaire (86) entourant le marteau inférieur (87) et se déplaçant avec celui-ci.

FIG.1

FIG.2

FIG.3

3/6

FIG.4

FIG.7

FIG.5

FIG.6

0019539

Office européen
des brevets

**RAPPORT DE RECHERCHE EUROPEENNE**

Numéro de la demande

EP 80 40 0655

## DOCUMENTS CONSIDERES COMME PERTINENTS

| Catégorie | Citation du document avec indication, en cas de besoin, des parties pertinentes | Revendication concernée |
|---|---|---|
| A | <u>US - A - 1 997 881</u> (DREXEL)<br>* En totalité * | 1-4,7,<br>10 |
| | -- | |
| A | <u>US - A - 2 575 608</u> (WILLIAMS SR)<br>* Colonne 3, figure 5 * | 1,2 |
| | -- | |
| A | <u>US - A - 3 147 783</u> (NOLTES)<br>* En totalité * | 1,2 |
| | -- | |
| A | <u>NL - C - 67 240</u> (BOSCH)<br>* En totalité * | 1,2 |
| | -- | |
| DA | <u>US - A - 3 613 756</u> (SNYDER JR)<br>* En totalité * | 1,2 |
| | -- | |
| A | <u>US - A - 2 500 705</u> (RICHARDS)<br>* En totalité * | 1 |
| | ---- | |

**CLASSEMENT DE LA DEMANDE (Int. Cl. 3)**

A 47 J 43/14
A 47 G 19/28

**DOMAINES TECHNIQUES RECHERCHES (Int. Cl. 3)**

A 47 J
A 47 G

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 07-08-1980 | SCHARTZ |

OEB Form 1503.1 06.78